# EUROPEAN PATENT APPLICATION

(11) **EP 3 035 610 A1**
(43) Date of publication of application: **22.06.2016**
(21) Application number: 14307076.1
(22) Date of filing: 18.12.2014
(51) Int. Cl.: H04L 12/723

(54) **Storage space identification and signaling/notification in a label distribution protocol**

(71) Applicant: ALCATEL LUCENT, 92100 Boulogne-Billancourt (FR)
(72) Inventor: Verchere, Dominique, 91620 Nozay (FR); Vigoureax, Martin, 91620 Nozay (FR)
(74) Representative: Hirsch & Associés

(57) **Abstract**

A method for distributing information concerning storage spaces which have been created at network nodes of an IP network to peer network nodes such that the latter can transfer content for storage in those storage spaces is provided. Labels are bound to storage spaces and the existing Label Distribution Protocol (LDP) is used for informing label switched routers (LSRs) of label assignments, specific storage items being encoded in a Storage Element which is carried in a newly defined FEC (Forward Equivalence Class) of the Label Distribution Protocol.

## Description

### FIELD OF THE INVENTION

The present invention relates to IP networks, and more particularly to storage of data at network nodes and a mechanism for distributing information concerning storage spaces which have been created at network nodes to peer network nodes such that the latter can transfer content for storage in those storage spaces.

### BACKGROUND OF THE INVENTION

Network nodes (i.e. routers and switches) have the capacity to include considerable storage capacity, not only for Web site caching and replication, but available as pure storage capacity for storing very considerable volumes of data, of a variety of types ranging from entertainment to databases to computer programs. Such storage is unrelated to the transport or routing function of the node, but the available memory resources may participate in both. The use of such storage spaces is currently in its infancy.

The continuing growth of broadband technology and the corresponding need for more and more storage capacity has to a large degree been driven by the hunger of customers for new multimedia services as well as Web content. In particular, the use of audio and video streaming formats has become common for delivery of rich media to the public, both residential and business customers. To satisfy rapidly changing needs for storage for applications which users are calling for, massive storage capabilities, easily allocated and de-allocated corresponding to changing consumer needs and preferences - which may differ from one location to another - are essential. Network nodes, i.e. switches and routers, are ideal to fulfill this function. A challenge vendors are now facing is to provide solutions enabling full use to be made of such storage capabilities for storing applications and these storage capabilities to be managed (e.g., allocated/reserved, freed, modified) in a dynamic manner as needs evolve and change.

In a model often referred to as LDP over RSVP (Label Distribution protocol over Resource Reservation Protocol) where bandwidth is managed using the RSVP-TE (Resource Reservation Protocol - Traffic Engineering) protocol and discrimination of service traffic is performed using labels assigned by the LDP Label Distribution protocol, there is currently no solution suitable to meet the above challenge. The primary reason is that the availability of storage capabilities integrated into routing and switching devices is still at an early stage and thus so is the need to allocate labels to storage-targeting traffic.

Nevertheless one solution that could be envisaged is to rely on what is known as the slow path. In the slow path, reliance is placed on the normal software processing path for packets unlike the so-called fast path which uses special packet handling hardware in routers, generally ASIC integrated circuits. If one were to implement the slow path, this could be done by targeting the storage-hosting node itself (for example using its loopback address or its controller address) and then having the controller forward traffic to the storage volume using the in the slow path. The drawback of this solution is of course that traffic is taken off the fast path and, in the case of high volumes of traffic, would most likely result in overloading the controller, the function of which is not to forward data traffic.

Another solution could consist in relying on management software implemented at management plane level. Such software relies on knowledge of the equipment which is deployed and thus would be in a position to take into account storage information entered by the network operator. However, static configuration of this type using management software is not suited to exploiting well known and proven distributed IP based control protocols such as LDP.

### SUMMARY OF THE INVENTION

While there is no difficulty in integrating storage means into routing and switching devices, the invention sets out to provide solutions enabling the exploitation of such storage means for application traffic and thus to provide means allowing access to the storage volumes in the fast path (as defined above) as well as means to exploit these storage means in the same way that bandwidth is today controlled (e.g. allocated/reserved, freed etc.).

More particularly, the invention provides a method for managing bandwidth and managing storage resources within a single session of a protocol being a Label Distribution Protocol (LDP) IP (Internet protocol) network having network nodes, said network including a label switched router (LSR) comprising storage means, the method comprising:
- generating a label distribution protocol message,
- communicating said message in accordance with the label distribution protocol to said label switched router.

Said label distribution protocol message includes an identifier to identify storage means of said label switched router and to signal attributes of said storage means, in such a manner that storage means of said label switched router is identified as being associated with a label assignment of another label switched router.

According to another aspect, the invention provides a method for informing other peer network nodes of the existence and capabilities of storage resources created at a specific network node of said network using the existing capabilities of the Label Distribution Protocol (LDP), so that other network nodes may transfer content for storage at said specific network node, comprising the steps of:
- defining a new object in the Label Distribution Protocol (LDP),
- at said specific network node, binding labels as part of said Label Distribution Protocol (LDP) to existing or newly-created storage spaces at said specific network node,
- coding information carried in said labels into at least one of said objects and inserting these new objects into appropriate LDP messages,
- using said LDP messages to distribute said label binding information to at least one other peer network node by defining procedures within the MPLS Label Distribution Protocol to enable a said specific network node to distribute said labels bound to storage spaces to other peer network nodes to inform them of the label bindings it has made.

According to the invention, a volume of storage can be represented as one or more Storage Elements. Each Storage Element encodes the specific storage items and a Storage Element is carried in a newly defined FEC TLV. This term is defined below. The FEC TLV is used to identify the particular storage space that a label is bound to.

The invention further includes a mechanism for inserting these new objects into the appropriate LDP messages (for example Label Request, Label Mapping, Label Abort request, Label Withdraw, and Label Release messages).

According to another aspect, the invention also provides a non-transitory machine-readable storage medium having machine-readable instructions for causing a processor to perform at least a part of the above-mentioned method.

### DETAILED DESCRIPTION OF A PREFERRED EMBODIMENT

A variety of protocols exist for establishing label switching paths across a network. According to the invention, the protocol is the Label Distribution Protocol (LDP). The invention defines new LDP (Label Distribution Protocol) objects. Before discussing the new LDP objects we shall discuss the LDP protocol in general. Briefly stated, the LDP protocol consists of procedures and messages by which network nodes designated as Label Switched Routers (LSRs) establish connection paths through a network by using labels to map network-layer routing information directly to data-link layer switched paths. By assigning labels to packets, a network node is rendered capable of forwarding all packets that carry the same label in the same way. The connection paths established are known as Label Switched Paths (LSPs). Two LSRs (Label Switched Routers) which use LDP to exchange label mapping information are known as LDP peers and they set up an LDP session between themselves. In a single session, each peer is able to learn about the other's label mappings, in other words, the protocol is bi-directional.

Multi-protocol Label Switching (MPLS) is a mechanism used to engineer traffic patterns within IP networks. Using MPLS, a source device can request a path through a network, i.e. a Label Switched Path (LSP). An LSP defines a distinct path through the network to carry MPLS packets from the source device to a destination device. MPLS label switching routers (LSRs) must agree on the meaning of the labels used to forward traffic between and through them. The LDP (Label Distribution Protocol) defines a corresponding set of procedures and messages by which one LSR informs another of the label bindings it has made. A short label associated with a particular LSP is affixed to packets that travel through the network via the LSP. Routers along the path cooperatively perform operations to forward the MPLS packets along the established path.

The LDP protocol associates what is known as a Forwarding Equivalence Class (FEC) with each LSP it creates. A FEC element is placed in the information field of an IP datagram. The FEC associated with an LSP specifies which packets are mapped to that LSP. According to the invention, a volume of storage is represented as one or more Storage Elements. Each Storage Element encodes the specific storage items and a Storage Element is carried in a newly defined FEC TLV. LDP uses a Type-Length-Value (TLV) encoding scheme to encode the information carried in LDP messages. These are exchanged by sending LDP protocol data units (PDUs) over LDP-session Transmission Control Protocol (TCP) connections. The said FEC TLV is used to identify the particular storage space that a label is bound to. The new type of FEC element is defined for encoding storage items as follows: A FEC (Forwarding Equivalence Class) is associated with each LSP created. This FEC specifies which packets are mapped to that LSP.

Several categories of LDP messages exist, the principal ones of which are: Discovery messages, which are used to announce and maintain the presence of an LSR in a network; Session messages, which are used to establish, maintain, and terminate sessions between LDP peers; and Advertisement messages, which are used to create, change, and delete label mapping for FECs. The invention relies principally on the latter Advertisement messages.

The following detailed description refers to a particular embodiment of the invention. The same principle of the invention may apply to the same or similar elements, such as the appropriate LDP messages.

According to an embodiment, the LDP protocol enables the source router to distribute assigned labels to destination routers. The source router allocates an assigned label to downstream routers such that, for instance, source router may forward traffic from source network in one or several packets that comprises the assigned label of each of the destination routers.

In this example, the source router uses LDP extended to enable the binding of labels to storage spaces and the distribution of these labels to destination routers (and/or intermediate routers) such that they can transfer data for storage in said storage spaces.

The storage means are integrated into the destination routers (and/or intermediate routers). Storage means can be defined as one or more storage elements.

Thus, such an arrangement provides a solution enabling the exploitation of such storage means for application traffic and provides means to exploit these storage means in the same way than bandwidth is today controlled (e.g. allocated/reserved, freed etc.).

According to an embodiment, LDP may also include an identifier to identify storages spaces and to signal attributes of these storage spaces, in such a manner that storage means of a destination router are identified as being associated with a label assignment from the source router to the destination router. More particularly, LDP may associate a Forwarding Equivalence Class (FEC) element with each of the destination routers (and/or intermediate routers) having storage means. This FEC element with storage parameters enables the MPLS Label Distribution Protocol to be used as the basis to define the new set of procedures by which one source router means distributes labels bound to storage means to inform destination routers of the label bindings it has made.

As mentioned above, said assigned labels are not limited to the labels which are distributed by the source router. The invention concerns any assigned labels distributed by any of the source router, destination routers (or intermediate router). Indeed in the above-mentioned embodiment, the assigned label is a Label Mapping message. This message can also be a Label Abort request, Label Withdraw or Label Release Message; all appropriate LDP messages that are distributed from the source router to a destination router used to advertise, release and withdraw assigned label mappings

Reciprocally, assigned labels which are distributed from the destination router (and/or intermediate routers) to the source router are also covered by the present invention in their role of assigned labels. Typically, the assigned label might be a Label Request. Similarly if a destination router generates a Label Request to a neighbor destination router, this assignment label may be used to enable the binding of labels to storage spaces. In these examples, the destination routers use LDP extended to enable the binding of labels to storage spaces and the distribution of those labels to destination routers (and/or intermediate routers) such that they can transfer data to said storage spaces.

As seen, the storage means are integrated in the destination routers (and/or intermediate routers). Storage means can be defined as one or more storage elements.

The invention includes a mechanism for inserting the FEC TLV elements into all appropriate LDP messages. As said earlier, all LDP messages have a common structure that uses a Type-Length-Value (TLV) encoding scheme. This TLV encoding is used to encode much of the information carried in LDP messages.

According to an embodiment, each storage element of the storage means encodes the specific storage items and a storage element is carried in a FEC Type-length-value (TLV) element. The FEC TLV element is used to identify the particular storage means that a label is bound to. This FEC TLV element is defined in an LDP Initialization message sent from a destination router to other routers in the computer network and indicates a set of capabilities relative to the storage supported by this router.

More specifically, the new type of FEC element defined for encoding storage items is as follows:

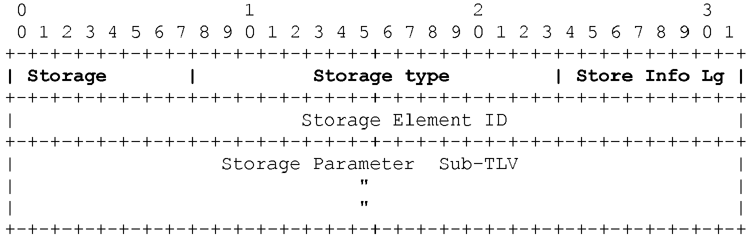

This new label distribution protocol FEC TLV element, for use in establishing the binding of labels to storage means and the distribution of those labels to destination routers such that they can transfer content on these storage means, principally defines the type of storage and the storage parameters. The type name of the FEC TLV element is "Storage" and its one octet encoding may be defined as part of a standard. The "Storage Type" is 16-bit quantity containing a value that encodes the type of storage for the storage means. The possible values for this field may be defined as part of a standard. "Store Info Lg" is the length required to encode the parameters of the FEC TLV element for storage. "Storage Element ID" is a non-zero 32-bit ID that, together with the "Storage type" identifies a particular storage means.

"Storage Parameter Sub-TLV" is used to provide storage-specific parameters. Typically, it includes the storage capacity and may include other parameters such as file systems specific information, policies, etc. The "Storage Parameter Sub-TLV" is part of the FEC element and the rules of LDP makes it impossible to change the storage parameters once the LDP session has been set up.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. A method for managing bandwidth and managing storage resources within a single session of a protocol being a Label Distribution Protocol (LDP) for informing label switched routers (LSRs) of their label assignments forwarding bandwidth reservation requests in a multi-protocol label switching (MPLS) IP (Internet protocol) network having network nodes, said network including a label switched router (LSR) comprising storage means, the method comprising:
- generating a label distribution protocol message,
- communicating said message in accordance with the label distribution protocol to said label switched router,
wherein said label distribution protocol message includes an identifier to identify storage means of said label switched router and to signal attributes of said storage means, in such a manner that storage means of said label switched router is identified as being associated with a label assignment of another label switched router.

2. The method according to claim 1 for informing other peer network nodes of the existence and capabilities of storage resources created at a specific network node of said network using the existing capabilities of the Label Distribution Protocol (LDP), so that other network nodes may transfer content for storage at said specific network node, comprising the steps of:
- defining a new object in the Label Distribution Protocol (LDP),
- at said specific network node, binding labels as part of said Label Distribution Protocol (LDP) to existing or newly-created storage spaces at said specific network node,
- coding information carried in said labels into at least one of said objects and inserting these new objects into appropriate LDP messages,
- using said LDP messages to distribute said label binding information to at least one other peer network node by defining procedures within the MPLS Label Distribution Protocol to enable a said specific network node to distribute said labels bound to storage spaces to other peer network nodes to inform them of the label bindings it has made.

3. The method according to claim 2 whereby the step of inserting said objects into an appropriate LDP message comprises inserting said objects into one of the following LDP messages: Label Request, Label Mapping, Label Abort request, Label Withdraw, and Label Release messages.

4. The method according to any one of the preceding claims, wherein said identifier of said label distribution protocol message is a forwarding equivalence class (FEC) element.

5. The method according to any one of the preceding claims, wherein generating the label distribution protocol message comprises generating a map message to specify the label associated with a label switched path (LSP).

6. The method according to claim 1 or 2, wherein generating the label distribution protocol message comprises a withdraw message to withdraw the label associated with a label switched path (LSP).

7. The method according to claim 1 or 2, where generating the label distribution protocol message comprises a label request message to request the assignment of the label associated with a label switched path (LSP).

8. The method according to any of the claims 4 to 7, wherein the FEC element contains information representative of the type of storage offered by said storage means.

9. The method according to claim 8, wherein the FEC element further contains information representative of a storage element identifier, whereby said storage element identifier, together with a storage type, enables the identification of a particular storage means.

10. The method according to any of the claims 4 to 9, wherein the FEC element contains information representative of storage parameters, such as the storage capacity of the storage means.

11. The method according to claim 5, comprising:
- establishing the LSP having a source router and a destination router,
- mapping packets received by the source router associated with the LSP to a destination router in accordance with the LDP.

12. The method according to claim 7, comprising:
- distributing a request for labels from a destination router associated with the label switched path to the source router.

13. The method according to any one of claims 4 to 12, wherein said FEC element has the following format: 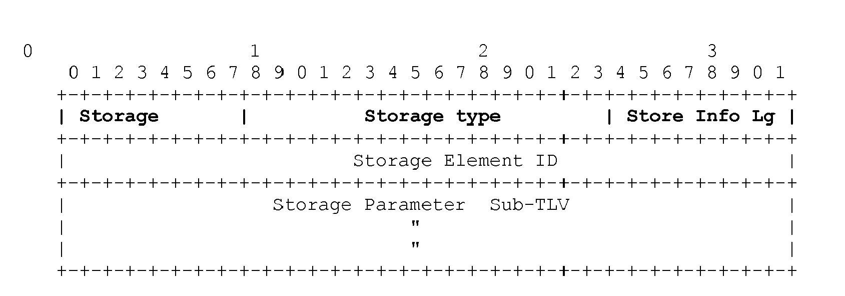 wherein:
- Storage is the name of the FEC
- Storage Type is 16-bit quantity containing a value that represents the type of storage
- Store Info Lg is the length required to encode the parameters of the FEC element for storage.
- Storage Element ID is non-zero 32-bit ID that, together with the Storage Type identifies a particular storage space, and
- Storage Parameter Sub-TLV identifies storage-specific parameters, in particular storage capacity and optionally other parameters comprising information specific to file systems and policies relating to storage.

14. A non-transitory machine-readable storage medium having machine-readable instructions for causing a processor to perform the method according to any one of claims 1 to 13.
